# EUROPÄISCHE PATENTSCHRIFT

(11) **EP 3 642 460 B1**
(45) Veröffentlichungstag und Bekanntmachung des Hinweises auf die Patenterteilung: **17.02.2021**
(21) Anmeldenummer: 18731812.6
(22) Anmeldetag: 14.06.2018
(51) Int. Cl.: F01N 3/10, F01N 3/30, F01N 3/34, F01N 3/021, F01N 1/14, F01N 13/00

(54) **ABGASNACHBEHANDLUNGSSYSTEM SOWIE VERFAHREN ZUR ABGASNACHBEHANDLUNG EINES VERBRENNUNGSMOTORS**
SYSTEM AND METHOD FOR EXHAUST-GAS AFTERTREATMENT OF AN INTERNAL COMBUSTION ENGINE
SYSTÈME DE RETRAITEMENT DES GAZ D'ÉCHAPPEMENT ET PROCÉDÉ POUR LE RETRAITEMENT DES GAZ D'ÉCHAPPEMENT D'UN MOTEUR A COMBUSTION INTERNE

(30) Priorität: 19.06.2017 DE 102017113366
(43) Veröffentlichungstag der Anmeldung: 29.04.2020
(73) Patentinhaber: Volkswagen Aktiengesellschaft, 38440 Wolfsburg (DE)
(72) Erfinder: HUPFELD, Bernd, 38518 Gifhorn (DE); BARON VON CEUMERN-LINDENSTJERNA, Falk-Christian, 38124 Braunschweig (DE); PAUKNER, Stefan, 38442 Wolfsburg (DE)
(74) Vertreter: Gulde & Partner
(86) Internationale Anmeldenummer: PCT/EP2018/065772
(87) Internationale Veröffentlichungsnummer: WO 2018/234141

(56) Entgegenhaltungen:
- EP-A1- 2 650 042
- EP-A1- 2 650 042
- EP-A1- 3 115 566
- EP-A1- 3 115 566
- WO-A1-2015/135983
- WO-A1-2015/135983
- DE-A1-102015 219 114
- DE-A1-102015 219 114

## Beschreibung

Die Erfindung betrifft ein Abgasnachbehandlungssystem zur Abgasnachbehandlung der Abgase eines Verbrennungsmotors sowie ein Verfahren zur Abgasnachbehandlung eines Verbrennungsmotors gemäß dem Oberbegriff der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Dieselmotoren finden aktuell Abgasnachbehandlungssysteme Verwendung, welche einen Oxidationskatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen.

Bei Ottomotoren finden unterschiedliche Abgasnachbehandlungssysteme mit Drei-Wege-Katalysatoren und Vier-Wege-Katalysatoren Verwendung. Beispielsweise ist eine Konzept bekannt, bei welchem ein motornaher Drei-Wege-Katalysator mit einem Vier-Wege-Katalysator in Unterbodenlage des Kraftfahrzeuges kombiniert wird, wobei stromabwärts des Drei-Wege-Katalysators und stromaufwärts des Vier-Wege-Katalysators zusätzlich Sekundärluft in den Abgaskanal des Verbrennungsmotors eingeblasen werden kann. Obwohl ein solches Abgasnachbehandlungssystem im Normalbetrieb für eine sehr effiziente Konvertierung von schädlichen Abgaskomponenten sorgt und die Emissionen minimiert, können in bestimmten Betriebssituationen des Verbrennungsmotors, insbesondere in einer Kaltstartphase des Verbrennungsmotors oder bei einer Regeneration des Vier-Wege-Katalysators, nicht alle schädlichen Abgaskomponenten konvertiert werden und es kommt zu einem Anstieg der Endrohremissionen.

Aus der DE 10 2012 011 603 A1 ist eine Abgasanlage für einen fremdgezündeten Verbrennungsmotor bekannt, in welcher zwischen einem motornahen Vorkatalysator und einem Hauptkatalysator ein HC-Adsorber zur Zwischenspeicherung von unverbrannten Kohlenwasserstoffen angeordnet ist. Dabei ist stromabwärts des HC-Adsorbers und stromaufwärts des Hauptkatalysators ein Brenner angeordnet, um den Katalysator sehr schnell nach einem Motorstart des Verbrennungsmotors auf eine Betriebstemperatur aufzuheizen, bei der eine katalytische Umsetzung der im Abgas enthaltenen Schadstoffe durch den Hauptkatalysator möglich ist. Dabei kann der HC-Adsorber insbesondere bei kalten Abgastemperaturen unverbrannte Kohlenwasserstoffe zwischenspeichern, welche bei höheren Abgastemperaturen wieder aus dem HC-Adsorber ausgetragen werden. Daher ist der Brenner so auszulegen, dass der Hauptkatalysator seine Light-Off-Temperatur erreicht hat, bevor es zu einem thermisch induzierten Austreiben der unverbrannten Kohlenwasserstoffe aus dem HC-Adsorber kommt.

Aus der DE 10 2015 212 846 A1 ist eine Vorrichtung zur Abgasnachbehandlung eines fremdgezündeten Verbrennungsmotors bekannt, bei der in dem Abgaskanal zumindest ein Drei-Wege-Katalysator, ein NOx-Speicherkatalysator und ein Partikelfilter angeordnet sind, wobei stromabwärts des Drei-Wege-Katalysators und stromaufwärts des NOx-Speicherkatalysators und des Partikelfilters Sekundärluft in den Abgaskanal eingeblasen wird, um zeitgleich eine Entschwefelung des NOx-Speicherkatalysators und eine Regeneration des Partikelfilters zu ermöglichen und somit den Zeitraum, in dem die Rohemissionen des Verbrennungsmotors erhöht sind, begrenzt zu halten.

Aus der EP 2 650 042 A1 ist ein Abgasnachbehandlungssystem für einen direkteinspritzenden Benzinmotor bekannt. Dabei sind in der Abgasanlage ein motornaher Drei-Wege-Katalysator und stromabwärts des motornahen Drei-Wege-Katalysators ein Vier-Wege-Katalysator angeordnet.

Die EP 3 115 566 A1 offenbart eine Vorrichtung zur Abgasnachbehandlung eines Verbrennungsmotors. Die Vorrichtung umfasst einen Abgaskanal, einen im Abgaskanal angeordneten Drei-Wege-Katalysator, einer in Strömungsrichtung des Abgases durch den Abgaskanal stromabwärts des Drei-Wege-Katalysators angeordneten Einmündung einer Sekundärluftleitung, einen stromabwärts der Einmündung der Sekundärluftleitung angeordneten ersten NOx-Speicherkatalysator sowie einem ebenfalls stromabwärts der Einmündung der Sekundärluftleitung angeordneten Partikelfilter.

Aus der DE 10 2015 219 114 A1 ist eine Vorrichtung zur Abgasnachbehandlung eines Verbrennungsmotors bekannt. Die Vorrichtung umfasst einen Abgaskanal, in dem ein Drei-Wege-Katalysator, ein erster NOx-Speicherkatalysator sowie ein in Strömungsrichtung stromabwärts des ersten NOx-Speicherkatalysators und stromabwärts des Drei-Wege-Katalysators angeordneten zweiten NOx-Speicherkatalysator. Dabei ist vorgesehen, dass stromabwärts des ersten NOx-Speicherkatalysators und stromaufwärts des zweiten NOx-Speicherkatalysators ein Einspritzventil zur Einbringung von Kraftstoff in den Abgaskanal vorgesehen ist.

Die WO 2015 / 135 983 A1 offenbart ein Katalysatorsystem zur Verringerung der schädlichen Abgasbestandteile und der klimaschädlichen Sekundäremissionen wie Ammoniak oder Lachgas. Das Katalysatorsystem zeichnet sich durch eine besondere Anordnung von Katalysatoren aus und kommt bei Motoren zum Einsatz, die mit überwiegend im Mittel stöchiometrischem Kraftstoff-Luft-Gemisch betrieben werden. Dabei sind ein motornaher Drei-Wege-Katalysator und ein SCR-Katalysator in Unterbodenlage sowie ein stromabwärts des SCR-Katalysators angeordneter weiterer Drei-Wege-Katalysator vorgesehen.

Auch wenn die aus dem Stand der Technik bekannten Verfahren zu einer Verbesserung der Abgasemissionen führen, so bleibt trotzdem weiteres Verbesserungspotenzial, um die Emissionen zu reduzieren.

Der Erfindung liegt nun die Aufgabe zugrunde, ein Abgasnachbehandlungssystem für einen Ottomotor vorzuschlagen, welches in allen Betriebssituationen eine maximal-effiziente Konvertierung von schädlichen Abgaskomponenten gewährleistet und auch weitere, aktuell noch unlimitierte Schadstoffkomponenten wie Lachgas (N2O) oder Ammoniak (NH3) konvertiert.

Erfindungsgemäß wird diese Aufgabe durch ein Abgasnachbehandlungssystem für einen fremdgezündeten Verbrennungsmotor nach dem Ottoprinzip gelöst, bei dem in einer an einen Auslass des Verbrennungsmotors angeschlossenen Abgasanlage stromabwärts des Auslasses ein motornaher, elektrisch beheizbarer Drei-Wege-Katalysator, stromabwärts des elektrisch beheizbaren Drei-Wege-Katalysators ein Vier-Wege-Katalysator und stromabwärts des Vier-Wege-Katalysators ein weiterer Drei-Wege-Katalysator angeordnet ist, wobei an der Abgasanlage ein Sekundärluftsystem vorgesehen ist, mit welchem Sekundärluft stromaufwärts des elektrisch beheizbaren Drei-Wege-Katalysators in die Abgasanlage eingeblasen werden kann. Unter einer motornahen Position wird dabei ein mittlerer Abgaslaufweg von höchstens 50 cm, insbesondere von höchstens 30 cm nach dem Auslass des Verbrennungsmotors verstanden. Durch den elektrisch beheizbaren Drei-Wege-Katalysator kann ein Aufheizen des Katalysators auf eine Light-Off-Temperatur mit dem Motorstart oder bereits vor einem Motorstart des Verbrennungsmotors erfolgen. Somit können die Kaltstart-Emissionen deutlich verbessert werden, da bereits ab dem Start des Verbrennungsmotors beziehungsweise unmittelbar danach eine wirksame Konvertierung der limitierten Abgaskomponenten möglich ist. Dabei wird stromaufwärts des elektrisch beheizbaren Drei-Wege-Katalysators Sekundärluft in den Abgaskanal eingeblasen, um konvektiv Wärme von der Heizscheibe auf den Drei-Wege-Katalysator zu übertragen. Durch eine verbesserte Lambdaregelung und ein schnelles Aufheizen des Katalysators können zusätzlich auch die NH3 und N2O Emissionen reduziert werden.

Durch die in den abhängigen Ansprüchen aufgeführten Merkmale sind vorteilhafte Weiterentwicklungen und Verbesserungen des im unabhängigen Anspruch angegebenen Abgasnachbehandlungssystems möglich.

Erfindungsgemäß ist vorgesehen, dass in der Abgasanlage stromabwärts des elektrisch beheizbaren Drei-Wege-Katalysators und stromaufwärts des Vier-Wege-Katalysators ein Brenner vorgesehen ist, mit welchem der Vier-Wege-Katalysator beheizbar ist. Durch einen Brenner kann der Vier-Wege-Katalysator zusätzlich zum Abgasstrom beheizt werden und somit kurz nach dem Start des Verbrennungsmotors auf eine Light-Off-Temperatur aufgeheizt werden. Dabei hat der Brenner eine Leistung von vorzugsweise mindestens 2 KW, besonders bevorzugt von mindestens 5 KW, insbesondere von mehr als 10 KW. Somit ist ein deutlich schnelleres Aufheizen als mit einem elektrischen Heizelement möglich, zudem sorgt das Abgas des Brenners für eine konvektive Wärmeübertragung, sodass der gesamte Vier-Wege-Katalysator sehr schnell auf eine Light-Off-Temperatur aufgeheizt werden kann und somit zu einer effizienten Konvertierung von limitierten Schadstoffen beitragen kann. Der Brenner kann eine deutlich größere Heizleistung als ein elektrisches Heizelement erbringen und somit in kürzerer Zeit einen Katalysator auf eine Light-Off-Temperatur aufheizen. Alternativ kann der Brenner auch bereits kurz vor dem Start des Verbrennungsmotors aktiviert werden.

In weiterer bevorzugter Ausgestaltung der Erfindung ist vorgesehen, dass in der Abgasanlage stromabwärts des elektrisch beheizbaren Drei-Wege-Katalysators und stromaufwärts des Vier-Wege-Katalysators ein HC-Adsorber angeordnet ist. Hat der elektrisch beheizbare Drei-Wege-Katalysator unmittelbar nach einem Kaltstart des Verbrennungsmotors noch nicht seine Light-Off-Temperatur erreicht, können unverbrannte Kohlenwasserstoffe in dieser ersten Phase nach dem Kaltstart noch nicht effizient durch den elektrisch beheizbaren Drei-Wege-Katalysator konvertiert werden. Diese Kohlenwasserstoffe werden bei niedrigen Abgastemperaturen, insbesondere bei Abgastemperatur unterhalb einer Schwellentemperatur von dem HC-Adsorber aufgenommen und oberhalb dieser Schwellentemperatur wieder aus dem HC-Adsorber ausgetrieben. Dazu befindet sich auf dem HC-Adsorber ein Zeolith, welcher als Molekularsieb wirkt. Dieser Zeolith speichert bei niedrigen Abgastemperaturen, bei denen die Katalysatoren noch nicht ihre Light-Off-Temperatur erreicht haben, unverbrannte Kohlenwasserstoffe ein. Überschreitet der HC-Adsorber eine Schwellentemperatur, werden die im HC-Adsorber zurückgehaltenen Kohlenwasserstoffe wieder freigesetzt. Da der HC-Adsorber stromabwärts des elektrisch beheizbaren Katalysators und stromaufwärts des Vier-Wege-Katalysators angeordnet ist, wird sichergestellt, dass der Vier-Wege-Katalysator seine Light-Off-Temperatur erreicht hat, bevor die im HC-Adsorber eingespeicherten Kohlenwasserstoffe desorbieren.

Gemäß einer bevorzugten Ausführungsform der Erfindung ist vorgesehen, dass das Sekundärluftsystem eine Sekundärluftpumpe und ein Sekundärluftventil umfasst, wobei das Sekundärluftventil auslassseitig an einem Zylinderkopf des Verbrennungsmotors angeordnet ist. Durch ein Einblasen von Sekundärluft auslassseitig in den Zylinderkopf steht dem heißen Abgas unmittelbar nach dem Ausschieben aus dem Zylinder zusätzlicher Sauerstoff zur Verfügung. Da hier die Abgastemperatur im Normalfall am höchsten ist, können hier unverbrannte Kraftstoffkomponenten exotherm mit dem zusätzlichen Sauerstoff aus der Sekundärluft umgesetzt werden.

In einer vorteilhaften Verbesserung des Abgasnachbehandlungssystems ist vorgesehen, dass die Sekundärluftpumpe über eine zweite Sekundärluftleitung und ein zweites Sekundärluftventil mit dem Brenner verbunden ist. Dadurch kann mit nur einer Sekundärluftpumpe sowohl das Einblasen von Frischluft in den Zylinderkopf als auch eine Luftversorgung des Brenners sichergestellt werden. Dabei kann die Luftmenge über die eine entsprechende Mengenregelung der Sekundärluftpumpe geregelt werden, sodass auch der zur Regeneration des im Vier-Wege-Katalysators zurückgehaltenen Rußes notwendige Sauerstoff durch das Sekundärluftsystem bereitgestellt werden kann.

Alternativ wird eine weitere bevorzugte Ausführungsform vorgeschlagen, bei welcher eine zweite Sekundärluftpumpe vorgesehen ist, über welche der Brenner mit Frischluft versorgbar ist. Durch eine zweite Sekundärluft zur Versorgung des Brenners können die beiden Sekundärluftventile unabhängig voneinander mit Sekundärluft versorgt werden, sodass stets eine bedarfsgerechte Sekundärluftversorgung möglich ist.

In einer bevorzugten Ausführungsform der Erfindung ist vorgesehen, dass stromabwärts einer Einmündung des Brenners in einen Abgaskanal der Abgasanlage und stromaufwärts des Vier-Wege-Katalysators ein erster Temperatursensor und stromabwärts des Vier-Wege-Katalysators, insbesondere stromabwärts des Vier-Wege-Katalysators und stromaufwärts des weiteren Drei-Wege-Katalysators, ein zweiter Temperatursensor angeordnet sind. Dadurch kann die Temperatur des Vier-Wege-Katalysators ermittelt werden. Liegt die Temperatur unterhalb einer zur Oxidation des Rußes notwendigen Temperatur und ist eine Regeneration des Vier-Wege-Katalysators vorgesehen, können somit auf einfache Art und Weise zusätzliche Heizmaßnahmen, insbesondere ein Betrieb des Brenners, eingeleitet werden, um den Vier-Wege-Katalysator auf eine zur Oxidation des Rußes notwendige Temperatur aufzuheizen und somit eine Regeneration des Vier-Wege-Katalysators zu ermöglichen. Dadurch ist insbesondere auch bei niedriger Teillast und bei einem Kurzstreckenbetrieb eine Regeneration des Vier-Wege-Katalysators möglich, bei der eine Anhebung der Temperatur mit anderen bekannten Maßnahmen nur zu einer unzureichenden Temperatursteigerung am Vier-Wege-Katalysator führen würde. Somit kann der Betriebsbereich des Verbrennungsmotors, in dem eine Regeneration des Vier-Wege-Katalysators möglich ist, deutlich vergrößert werden.

Gemäß einer weiteren Verbesserung des Abgasnachbehandlungssystems ist vorgesehen, dass jeweils stromaufwärts und stromabwärts des elektrisch beheizbaren Drei-Wege-Katalysators und stromaufwärts und stromabwärts des Vier-Wege-Katalysators Lambdasonden im Abgaskanal angeordnet sind, wobei die Lambdasonden als wasserschlagfeste, elektrisch beheizbare Lambdasonden ausgeführt sind. Dabei ist die Lambdasonde stromaufwärts des elektrisch beheizbaren Drei-Wege-Katalysators vorzugsweise als Breitband-Lambdasonde und die Lambdasonde stromabwärts des elektrisch beheizbaren Drei-Wege-Katalysators vorzugsweise als Sprung-Lambdasonde ausgebildet. Die dritte Lambdasonde unmittelbar stromaufwärts des Vier-Wege-Katalysators ist ebenfalls vorzugsweise als Breitband-Lambdasonde ausgebildet. Die vierte Lambdasonde stromabwärts des Vier-Wege-Katalysators ist bevorzugt als Sprung-Lambdasonde ausgebildet. Dabei werden die Lambdasonden vorzugsweise bereits vor einem Start des Verbrennungsmotors elektrisch aufgeheizt, sodass die Funktion der Lambdasonden unmittelbar nach dem Motorstart des Verbrennungsmotors gewährleistet ist. Somit kann die Regelung des Verbrennungsluftverhältnisses des Verbrennungsmotors in der Warmlaufphase des Verbrennungsmotors verbessert werden.

Die Erfindung betrifft ferner ein Verfahren zur Abgasnachbehandlung eines Verbrennungsmotors mit einem erfindungsgemäßen Abgasnachbehandlungssystem, wobei vor oder ab dem Start des Verbrennungsmotors der elektrisch beheizbare Drei-Wege-Katalysator beheizt wird und wobei ab dem Start des Verbrennungsmotors das Abgas durch einen Abgasbrenner beheizt wird, wobei das Beheizen des elektrisch beheizbaren Drei-Wege-Katalysators durch ein Auslösesignal eines Signalgebers gestartet wird. Durch ein Auslösesignal eines Signalgebers kann das Aufheizen der Katalysatoren und der Lambdasonde bereits vor einem Motorstart des Verbrennungsmotors beginnen, sodass der Katalysator bei Start des Verbrennungsmotors bereits vorgeheizt ist. Alternativ kann ein Beheizen auch erst ab dem Start oder kurz nach dem Start des Verbrennungsmotors erfolgen. Besonders vorteilhaft ist es, wenn zumindest einer der Katalysatoren bei Start des Verbrennungsmotors bereits seine Light-Off-Temperatur erreicht hat und somit ab dem Motorstart des Verbrennungsmotors zu einer effizienten Abgasnachbehandlung beitragen kann. Dazu kann stromaufwärts des elektrisch beheizbaren Drei-Wege-Katalysators Sekundärluft in den Abgaskanal eingeblasen werden, um ein konvektive Wärmeübertragung von dem elektrischen Heizelement auf die katalytische Struktur des elektrisch beheizbaren Katalysators zu unterstützen. Durch die hohe Heizleistung des Brenners kann der Vier-Wege-Katalysator in sehr kurzer Zeit auf eine Light-Off-Temperatur aufgeheizt werden, sodass der Vier-Wege-Katalysator ebenfalls sehr kurz nach dem Start des Verbrennungsmotors seine Light-Off-Temperatur erreicht hat. Alternativ ist es möglich, das Katalysatorvolumen des elektrisch beheizbaren motornahen Drei-Wege-Katalysators klein auszuführen, sodass ein schnelles Aufheizen des elektrisch beheizbaren Drei-Wege-Katalysators möglich ist.

In einer bevorzugten Ausführungsform des Verfahrens ist vorgesehen, dass der Signalgeber für das Auslösesignal ein Türkontaktschalter, ein Sensor zur Sitzplatzbelegung, insbesondere zur Sitzplatzbelegung des Fahrersitzes, ein Empfänger für ein schlüsselloses Schließsystem eines Kraftfahrzeuges, ein Gurtschlosssensor oder ein Steuergerät eines Hybridfahrzeuges ist. Um eine möglichst große Vorlaufzeit für das Aufheizen der Katalysatoren zu erreichen, ist es sinnvoll, wenn das Aufheizen durch ein Auslösesignal ausgelöst wird, welches zeitlich deutlich vor dem Start des Verbrennungsmotors liegt. Geht man davon aus, dass beispielsweise zwischen der Annäherung des Fahrers an das Kraftfahrzeug und dem Starten des Verbrennungsmotors etwas 20 - 30 s vergehen, so bieten sich das Signal eines Empfängers für ein schlüsselloses Schließsystem, beispielsweise eine Zentralverriegelung oder ein Keyless-Go-System oder ein Türkontaktschalter des Kraftfahrzeuges für ein Auslösesignal an. Alternativ kann eine Erwärmung des Katalysators bei einem Hybridfahrzeug auch durch ein Steuergerät des Hybridantriebs ausgelöst werden, wenn der Ladezustand der Batterie (State of Charge (SOC)) ein baldiges Umschalten von einem rein elektrischen Betrieb auf einen Betrieb mit Verbrennungsmotor signalisiert. Alternativ können auch andere Sensoren, wie beispielsweise Sensoren zur Erkennung der Sitzplatzbelegung des Fahrersitzes oder ein Gurtschlosssensor genutzt werden, um einen bevorstehenden Start des Verbrennungsmotors zu erkennen und das Vorheizen der Katalysatoren und Lambdasonden einzuleiten. Zusätzlich kann bei einem solchen System der Start des Verbrennungsmotors durch das Steuergerät solange gesperrt werden, bis die Katalysatoren eine erforderliche Mindesttemperatur erreicht haben.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei mit den gleichen Bezugsziffern gekennzeichnet. Es zeigen:
- Figur 1: ein erstes Ausführungsbeispiel eines nicht erfindungsgemäßen Abgasnachbehandlungssystems für einen fremdgezündeten Verbrennungsmotor;
- Figur 2: ein bevorzugtes Ausführungsbeispiel eines erfindungsgemäßen Abgasnachbehandlungssystems für einen fremdgezündeten Verbrennungsmotor;
- Figur 3: ein weiteres Ausführungsbeispiel eines nicht erfindungsgemäßen Abgasnachbehandlungssystems für einen fremdgezündeten Verbrennungsmotor;
- Figur 4: ein weiteres Ausführungsbeispiel eines erfindungsgemäßen Abgasnachbehandlungssystems für einen fremdgezündeten Verbrennungsmotor, wobei der Brenner und der Auslass über eine gemeinsame Sekundärluftpumpe mit Frischluft versorgt werden.
- Figur 5: ein weiteres Ausführungsbeispiel eines bevorzugten erfindungsgemäßen Abgasnachbehandlungssystems, wobei der Brenner und der Auslass des Verbrennungsmotors über eine gemeinsame Sekundärluftpumpe mit zwei Sekundärluftventilen mit Frischluft versorgt werden; und
- Figur 6: ein Ablaufdiagramm zur Aufheizung des Abgasnachbehandlungssystems vor und während eines Kaltstarts des Verbrennungsmotors.

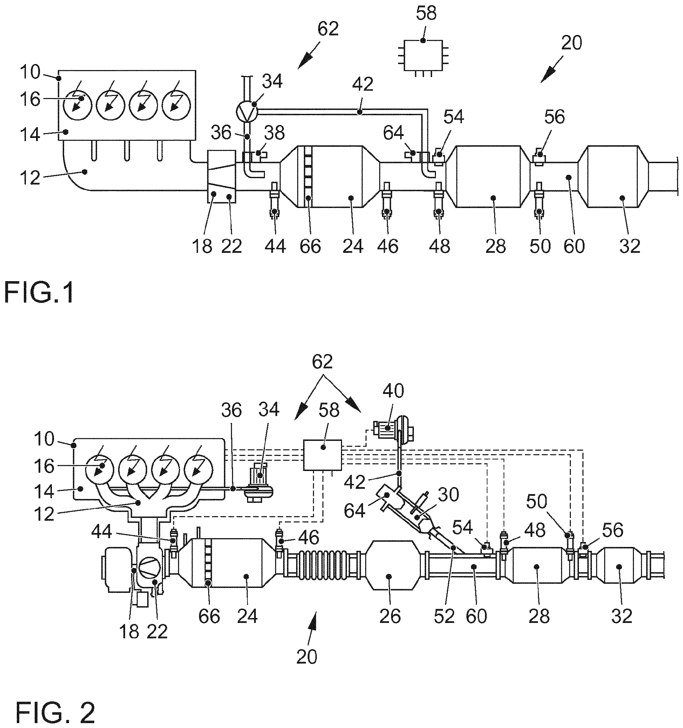

In Figur 1 ist ein erstes Ausführungsbeispiel eines nicht erfindungsgemäßen Abgasnachbehandlungssystems für einen Verbrennungsmotor 10 dargestellt. Der Verbrennungsmotor 10 ist als ein fremdgezündeter Verbrennungsmotor 10, vorzugsweise als ein mittels Zündkerzen 16 fremdgezündeter Verbrennungsmotor 10 nach dem Ottoprinzip ausgeführt. Dabei ist eine Abgasanlage 20 an einen Auslass 12 des Verbrennungsmotors 10 angeschlossen. In der Abgasanlage 20 sind in Strömungsrichtung eines Abgases durch die Abgasanlage 20 stromabwärts des Auslasses 12 des Verbrennungsmotors 10 eine Turbine 22 eines Abgasturboladers 18 und stromabwärts der Turbine 22 ein motornaher, elektrisch beheizbarer Drei-Wege-Katalysator 24 angeordnet. Der elektrisch beheizbare Drei-Wege-Katalysator 24 weist ein elektrisches Heizelement, vorzugsweise eine elektrische Heizscheibe 66 auf, welche vorzugsweise eingangsseitig an dem elektrisch beheizbaren Drei-Wege-Katalysator 24 angeordnet ist. Stromabwärts des elektrisch beheizbaren Drei-Wege-Katalysators 24 sind ein Vier-Wege-Katalysator 28, also ein Partikelfilter mit einer Drei-Wegekatalytisch wirksamen Beschichtung und weiter stromabwärts ein weiterer Drei-Wege-Katalysator 32 angeordnet. An der Abgasanlage 20 ist ein Sekundärluftsystem 62 mit einer Sekundärluftpumpe 34 vorgesehen, mit welcher Frischluft an einer ersten Einleitstelle durch ein erstes Sekundärluftventil 38 stromaufwärts des elektrisch beheizbaren Drei-Wege-Katalysators 24 und an einer zweiten Einleitstelle stromabwärts des elektrisch beheizbaren Drei-Wege-Katalysators 24 und stromaufwärts des Vier-Wege-Katalysators 28 über ein zweites Sekundärluftventil 64 in einen Abgaskanal 60 der Abgasanlage 20 eingebracht werden kann. Die beiden Sekundärluftventile 38, 64 sind über zwei Sekundärluftleitungen 36, 42 mit der Sekundärluftpumpe 34 verbunden. Stromaufwärts des elektrisch beheizbaren Drei-Wege-Katalysators 24 ist eine erste Lambdasonde 44, vorzugsweise eine Breitband-Lambdasonde, angeordnet, mit welcher das Verbrennungsluftverhältnis λ des Verbrennungsmotors 10 eingeregelt werden kann. Stromabwärts des elektrisch beheizbaren Drei-Wege-Katalysators 24 und stromaufwärts des zweiten Sekundärluftventils 64 ist eine zweite Lambdasonde 46, insbesondere eine Sprung-Lambdasonde, in dem Abgaskanal 60 angeordnet, um die Abweichungen der Lambdaregelung mit der Breitband-Lambdasonde 44 zu korrigieren und eine ordnungsgemäße Funktion des elektrisch beheizbaren Drei-Wege-Katalysators 24 sicherzustellen. Stromabwärts der zweiten Einleitstelle und stromaufwärts des Vier-Wege-Katalysators 28 ist eine dritte Lambdasonde 48, insbesondere eine weitere Breitband-Lambdasonde, angeordnet, um das Abgasluftverhältnis zu bestimmen, mit welchem der Vier-Wege-Katalysator 28 angeströmt wird, insbesondere dann, wenn durch das zweite Sekundärluftventil 64 Frischluft in den Abgaskanal 60 eingeblasen wird. Stromabwärts des Vier-Wege-Katalysators 28 ist eine vierte Lambdasonde 50, insbesondere eine weitere Sprung-Lambdasonde, angeordnet, um die Funktion des Vier-Wege-Katalysators 28 zu überprüfen. Stromabwärts des zweiten Sekundärluftventils 64 und stromaufwärts des Vier-Wege-Katalysators 28 ist ein erster Temperatursensor 54 in dem Abgaskanal 60 angeordnet, mit welchem eine Eingangstemperatur des Abgases vor Eintritt in den Vier-Wege-Katalysator 28 bestimmt werden kann. Stromabwärts des Vier-Wege-Katalysators 28 und stromaufwärts des weiteren Drei-Wege-Katalysators 32 ist ein weiterer Temperatursensor 56 vorgesehen, mit welchem eine Abgastemperatur stromabwärts des Vier-Wege-Katalysators 28 bestimmbar ist. Das Abgasnachbehandlungssystem weist ferner ein Steuergerät 58, insbesondere ein Steuergerät 58 des Verbrennungsmotors 10 auf, über welches die Signale der Lambdasonden 44, 46, 48, 50 und der Temperatursensoren 54, 56 verarbeitet werden können und das Verbrennungsluftverhältnis λ des Verbrennungsmotors 10, insbesondere die Kraftstoffmenge, und die Sekundärluftmengen, welche über die Sekundärluftventile 38, 64 dem Abgaskanal 60 zugeführt werden, geregelt werden können.

In Figur 2 ist ein bevorzugtes Ausführungsbeispiel eines erfindungsgemäßen Abgasnachbehandlungssystems für einen fremdgezündeten Verbrennungsmotor 10 dargestellt. In der Abgasanlage 20 des Verbrennungsmotors 10 sind in Strömungsrichtung eines Abgases des Verbrennungsmotors 10 durch die Abgasanlage 20 ein motornaher elektrisch beheizbarer Drei-Wege-Katalysator 24, ein stromabwärts des elektrisch beheizbaren Drei-Wege-Katalysators 24 ein HC-Adsorber 26, weiter stromabwärts ein Vier-Wege-Katalysator 28 und stromabwärts des Vier-Wege-Katalysators 28 ein weiterer Drei-Wege-Katalysator 32 angeordnet. Der elektrisch beheizbare Drei-Wege-Katalysator 24 kann durch eine Heizscheibe 66 beheizt werden. Der Vier-Wege-Katalysator 28 ist durch einen Brenner 30 beheizbar, welcher an einer Einmündung 52 stromabwärts des HC-Adsorbers 26 und stromaufwärts des Vier-Wege-Katalysators 28 in den Abgaskanal 60 der Abgasanlage 20 mündet. Das Abgasnachbehandlungssystem umfasst ferner ein Sekundärluftsystem 62 mit einer ersten Sekundärluftpumpe 34, welche über eine erste Sekundärluftleitung 36 mit einem Zylinderkopf 14 des Verbrennungsmotors 10 verbunden ist. Über die erste Sekundärluftleitung 36 kann Frischluft im Bereich des Auslasses 12 unmittelbar stromabwärts der Auslassventile des Verbrennungsmotors 10 in das heiße Abgas eingebracht werden, um eine exotherme Umsetzung der unverbrannten Kraftstoffkomponenten zu begünstigen. In der Abgasanlage 20 kann ein Abgasturbolader 18 mit einer Turbine 22 vorzugsweise stromaufwärts des elektrisch beheizbaren Drei-Wege-Katalysators 24 angeordnet sein. Unmittelbar stromaufwärts des elektrisch beheizbaren Drei-Wege-Katalysators 24 ist eine erste Lambdasonde 44, vorzugsweise eine Breitband-Lambdasonde, angeordnet, mit welcher das Verbrennungsluftverhältnis λ bestimmt werden kann, mit welchem der elektrisch beheizbare Drei-Wege-Katalysator 24 angeströmt wird. Unmittelbar stromabwärts des elektrisch beheizbaren Drei-Wege-Katalysators 24 ist eine weitere Lambdasonde 46, insbesondere eine Sprung-Lambdasonde, angeordnet, mit welcher die Funktion des elektrisch beheizbaren Drei-Wege-Katalysators 24 überwacht und ein Fett- oder Magerdurchbruch durch den elektrisch beheizbaren Drei-Wege-Katalysator 24 detektiert werden kann.

Ferner weist das Sekundärluftsystem 62 eine zweite Sekundärluftpumpe 40 auf, welche über eine zweite Sekundärluftleitung 42 mit einem Sekundärluftventil 64 an dem Brenner 30 verbunden ist. Unmittelbar stromaufwärts des Vier-Wege-Katalysators 28 sind eine dritte Lambdasonde 48 und ein erster Temperatursensor 54 vorgesehen, mit welchen das Abgasluftverhältnis beim Anströmen des Vier-Wege-Katalysators 28 ermittelt und der Brenner 30 entsprechend gesteuert werden kann. Stromabwärts des Vier-Wege-Katalysators 28 sind eine vierte Lambdasonde 50 und ein zweiter Temperatursensor 56 vorgesehen.

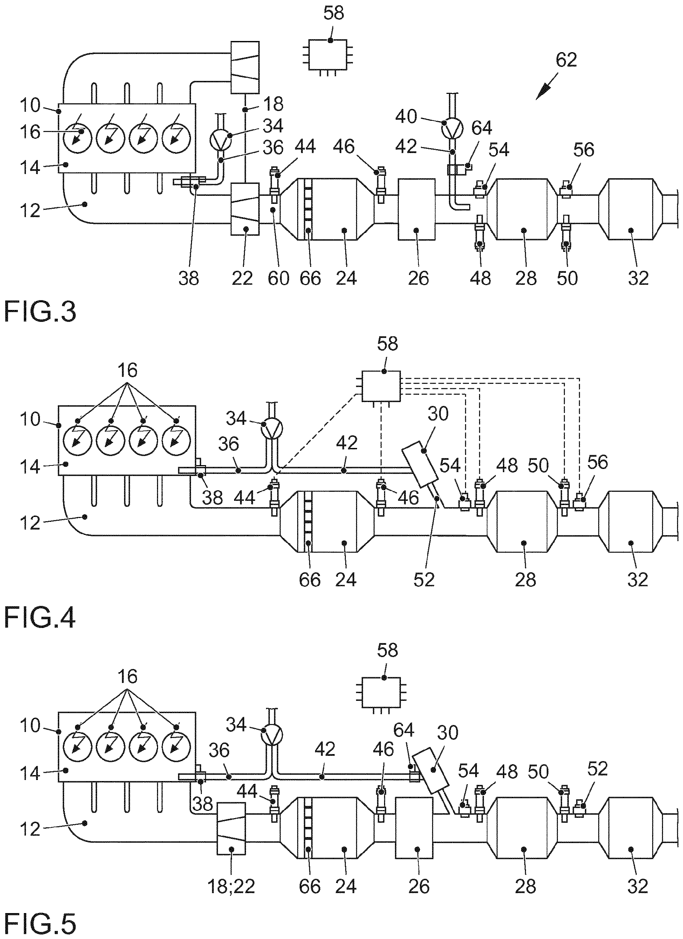

In Figur 3 ist ein weiteres Ausführungsbeispiel eines nicht erfindungsgemäßen Abgasnachbehandlungssystems für einen Verbrennungsmotor 10 dargestellt. Bei im Wesentlichen gleichem Aufbau wie zu Figur 1 ausgeführt, wird im Folgenden nur auf die Unterschiede zu dem ersten Ausführungsbeispiel eingegangen. Die Sekundärluftpumpe 34 ist über eine Sekundärluftleitung 36 mit dem Zylinderkopf 14 des Verbrennungsmotors 10 verbunden, an dem ein Sekundärluftventil 38 angeordnet ist, mit welchem die Sekundärluft auslassseitig unmittelbar stromabwärts der Auslassventile des Verbrennungsmotors 10 in den Zylinderkopf eingeblasen werden kann. Stromabwärts des elektrisch beheizbaren Drei-Wege-Katalysators 24 und stromaufwärts des Vier-Wege-Katalysators 28 ist zusätzlich ein HC-Adsorber angeordnet, mit welchem bei kaltem Abgas unverbrannte Kohlenwasserstoffe zwischengespeichert und bei heißem Abgas wieder an das Abgas abgegeben werden können. Ferner ist eine zweite Sekundärluftpumpe 40 vorgesehen, welche über eine zweite Sekundärluftleitung 42 mit einem zweiten Sekundärluftventil 64 verbunden ist, wobei das zweite Sekundärluftventil 64 mit einer Einleitstelle verbunden ist, über welche Frischluft stromabwärts des HC-Adsorbers 26 und stromaufwärts des Vier-Wege-Katalysators 28 in den Abgaskanal 60 eingeblasen werden kann.

Figur 4 zeigt ein weiteres Ausführungsbeispiel eines erfindungsgemäßen Abgasnachbehandlungssystems für einen Verbrennungsmotor 10. Bei im Wesentlichen gleichem Aufbau wie zu Figur 2 ausgeführt, wird im Folgenden nur auf die Unterschiede zu dem in Figur 2 dargestellten bevorzugten Ausführungsbeispiel eingegangen. Im Vergleich zu dem Ausführungsbeispiel in Figur 2 entfällt bei diesem Ausführungsbeispiel der HC-Adsorber stromabwärts des elektrisch beheizbaren Drei-Wege-Katalysators 24 und stromaufwärts des Vier-Wege-Katalysators 28. Dies ist möglich, da der elektrisch beheizbare Katalysator 24 schon vor dem Start des Verbrennungsmotors 10 aufgeheizt werden kann und der Vier-Wege-Katalysator 28 durch den Brenner 30 sehr schnell nach einem Start des Verbrennungsmotors auf eine Light-Off-Temperatur aufgeheizt wird. Somit kann der HC-Schlupf gering gehalten werden. Ferner ist in diesem Ausführungsbeispiel eine gemeinsame Sekundärluftpumpe 34 für das Einblasen von Sekundärluft in den Zylinderkopf 14 und zur Frischluftversorgung des Brenners 30 vorgesehen. Dazu ist die Sekundärluftpumpe 34 über eine erste Sekundärluftleitung 36 mit dem ersten Sekundärluftventil 38 an dem Zylinderkopf 14 des Verbrennungsmotors 10 und über eine zweite Sekundärluftleitung 42 mit einem zweiten Sekundärluftventil 64 an dem Brenner 30 verbunden. Durch die Sekundärluftpumpe 34 kann der elektrisch beheizbare Katalysator 24 bereits vor dem Start des Verbrennungsmotors 10 von einem Volumenstrom durchströmt werden und somit das Aufheizen des elektrisch beheizbaren Katalysators 24 begünstigen.

In Figur 5 ist ein weiteres bevorzugtes Ausführungsbeispiel eines erfindungsgemäßen Abgasnachbehandlungssystems für einen Verbrennungsmotor 10 dargestellt. Bei im Wesentlichen gleichem Aufbau wie zu Figur 2 ausgeführt, ist in diesem Ausführungsbeispiel nur eine Sekundärluftpumpe 34 vorgesehen, welche über eine erste Sekundärluftleitung 36 und ein erstes Sekundärluftventil 38 mit dem Zylinderkopf 14 des Verbrennungsmotors 10 verbunden ist. Somit kann die Sekundärluft unmittelbar stromabwärts des Auslassventils in den Auslass 12 des Verbrennungsmotors 10 eingebracht werden. Die Sekundärluftpumpe 34 ist über eine zweite Sekundärluftleitung 42 und ein zweites Sekundärluftventil 64 mit dem Brenner 30 verbunden, sodass der Brenner 30 ebenfalls durch die Sekundärluftpumpe 34 mit Frischluft versorgt werden kann und das Verbrennungsluftverhältnis des Brenners 30 eingeregelt werden kann. Dabei erfolgt die Luftmengenregelung bevorzugt über die Regelung der Sekundärluftpumpe 34. Zudem kann durch die zweite Sekundärluftleitung 42 und den Brenner 30 der zur Regeneration des im Vier-Wege-Katalysators 28 zurückgehaltenen Rußes notwendige Sauerstoff bereitgestellt werden, wodurch ein kontrollierter Rußabbrand auf dem Vier-Wege-Katalysator 28 ohne die Gefahr einer thermischen Schädigung des Vier-Wege-Katalysators 28 möglich ist.

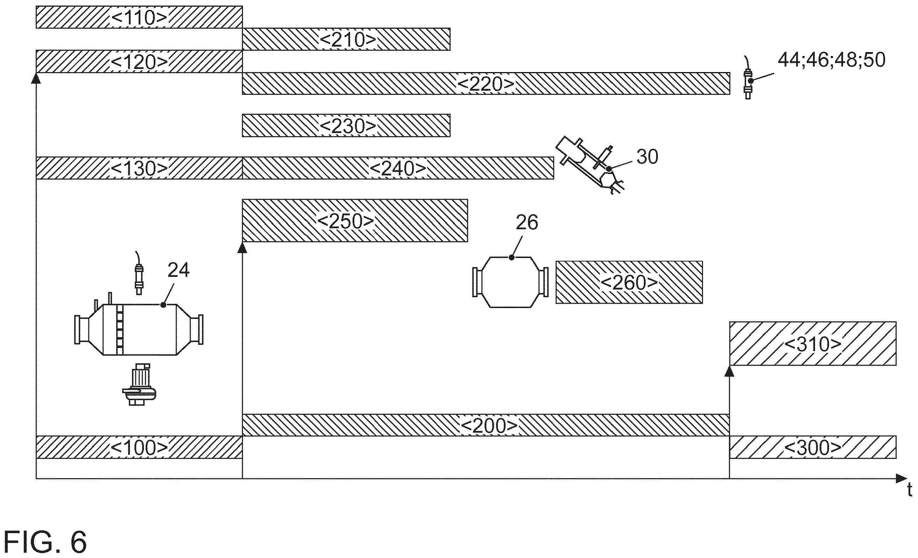

In Figur 6 wird ein erfindungsgemäßes Verfahren zur Abgasnachbehandlung eines Verbrennungsmotors 10 dargestellt. In einer Vorstartphase <100> kann in einem ersten Verfahrensschritt <110> mit der elektrischen Beheizung der Heizscheibe 66 des elektrisch beheizbaren Drei-Wege-Katalysators 24 begonnen werden. Alternativ kann dies auch erst mit dem Start des Verbrennungsmotors 10 erfolgen. Die Vorheizphase <100> wird wie vorhergehend beschrieben durch ein Auslösesignal eines Signalgebers, beispielsweise eines Türkontaktschalters oder eines Steuergeräts eines Hybridantriebs ausgelöst. Parallel kann durch die Sekundärluftpumpe 34 Frischluft stromaufwärts des elektrisch beheizbaren Drei-Wege-Katalysators 24 in die Abgasanlage 20 einblasen, um bei stillstehendem Verbrennungsmotor 10 eine Strömung durch die Abgasanlage 20 auszubilden und eine konvektive Wärmeübertragung von der Heizscheibe 66 auf den restlichen Teil des elektrisch beheizbaren Katalysators 24 zu ermöglichen. Alternativ ist auch ein Vorheizen des elektrisch beheizbaren Drei-Wege-Katalysators 24 ohne das Einbringen von Sekundärluft möglich. Parallel können in einem Verfahrensschritt <120> die Lambdasonden 44, 46, 48, 50 beheizt und auf eine Funktionstemperatur gebracht werden. Optional kann in einem Verfahrensschritt <130> mittels des Brenners 30 heißes Gas in die Abgasanlage 20 stromaufwärts des Vier-Wege-Katalysators 28 eingebracht werden, um diesen ebenfalls bereits vor dem Motorstart des Verbrennungsmotors 10 aufzuheizen. Das Einblasen der Sekundärluft kann mit Start des Verbrennungsmotors 10 beendet werden. Alternativ kann der elektrisch beheizbare Drei-Wege-Katalysator 24, insbesondere bei einem Hybridfahrzeug, periodisch aufgeheizt werden, sodass auch in einer elektrischen Fahrsituation immer die Betriebsbereitschaft des elektrisch beheizbaren Drei-Wege-Katalysators 24 vorliegt. Somit können bei einer Lastanforderung an den Verbrennungsmotor 10 die gasförmigen Schadstoffkomponenten sofort nach Motorstart effektiv umgesetzt werden.

In einer Startphase <200> wird der Verbrennungsmotor 10 gestartet. Dabei wird in einem Verfahrensschritt <210> der elektrisch beheizbare Drei-Wege-Katalysator 24 angesteuert und die Heizscheibe 66 weiter beheizt, bis eine Schwellentemperatur erreicht ist, welche vorzugsweise oberhalb der Light-Off-Temperatur des elektrisch beheizbaren Drei-Wege-Katalysators 24 liegt. In einem parallelen Verfahrensschritt <220> erfolgt eine Regelung des Verbrennungsluftverhältnisses λ auch während des Kaltstarts durch die Lambdasonden auf ein stöchiometrisches Verbrennungsluftverhältnis λ = 1, um die Rohemissionen auch während des Kaltstarts möglichst gering zu halten. Parallel wird der elektrisch beheizbare Drei-Wege-Katalysator 24 in einem Verfahrensschritt <230> durch motorische Maßnahmen, beispielsweise durch eine Verstellung des Zündwinkels in Richtung spät, weiter aufgeheizt. Ebenfalls parallel wird in einem Verfahrensschritt <240> der Vier-Wege-Katalysator 28 durch den Brenner 30 aufgeheizt, bis auch dieser eine Schwellentemperatur erreicht hat. Dabei wird der Brenner 30 vorzugsweise mit Start des Verbrennungsmotors 10 aktiviert. Bei kaltem Abgas werden die unverbrannten Kohlenwasserstoffe in einem weiteren parallelen Verfahrensschritt <250> in dem HC-Adsorber 26 eingespeichert. Hat der HC-Adsorber 26 eine Schwellentemperatur erreicht, so werden die in dem HC-Adsorber 26 eingelagerten unverbrannten Kohlenwasserstoffe in einem Verfahrensschritt <260> wieder ausgetragen und der HC-Adsorber 26 regeneriert. Ist die Startphase <200> abgeschlossen und die Katalysatoren 24, 28, 32 haben ihre Betriebstemperatur erreicht, folgt ein Wechsel auf einen Normalbetrieb <300>. In dem Normalbetrieb <300> wird der Verbrennungsmotor 10 in einem Verfahrensschritt <310> im Wesentlichen mit einem stöchiometrischen Verbrennungsluftverhältnis λ = 1 betrieben, um eine optimale Konvertierung der schädlichen Abgaskomponenten zu gewährleisten.

### Bezugszeichenliste

- 10: Verbrennungsmotor
- 12: Auslass
- 14: Zylinderkopf
- 16: Zündkerze
- 18: Turbolader
- 20: Abgasanlage
- 22: Turbine
- 24: elektrisch beheizbarer Drei-Wege-Katalysator
- 26: HC-Adsorber
- 28: Vier-Wege-Katalysator
- 30: Brenner
- 32: Drei-Wege-Katalysator
- 34: (erste) Sekundärluftpumpe
- 36: Sekundärluftleitung
- 38: Sekundärluftventil
- 40: (zweite) Sekundärluftpumpe
- 42: (zweite) Sekundärluftleitung
- 44: erste Lambdasonde
- 46: zweite Lambdasonde
- 48: dritte Lambdasonde
- 50: vierte Lambdasonde
- 52: Einmündung
- 54: (erster) Temperatursensor
- 56: (zweiter) Temperatursensor
- 58: Steuergerät
- 60: Abgaskanal
- 62: Sekundärluftsystem
- 64: (zweites) Sekundärluftventil
- 66: Heizscheibe

## Patentansprüche

1. Abgasnachbehandlungssystem für einen fremdgezündeten Verbrennungsmotor (10), bei dem in einer an einen Auslass (12) des Verbrennungsmotors (10) angeschlossenen Abgasanlage (20) stromabwärts des Auslasses (12) ein motornaher, elektrisch beheizbarer Drei-Wege-Katalysator (24), stromabwärts des elektrisch beheizbaren Drei-Wege-Katalysators (24) ein Vier-Wege-Katalysator (28) und stromabwärts des Vier-Wege-Katalysators (28) ein weiterer Drei-Wege-Katalysator (32) angeordnet sind, wobei an der Abgasanlage (20) ein Sekundärluftsystem (62) vorgesehen ist, mit welchem Sekundärluft stromaufwärts des elektrisch beheizbaren Drei-Wege-Katalysators (24) in die Abgasanlage (20) des Verbrennungsmotors (10) einblasbar ist oder eingeblasen wird, und wobei in der Abgasanlage (20) stromabwärts des elektrisch beheizbaren Drei-Wege-Katalysators (24) und stromaufwärts des Vier-Wege-Katalysators (28) ein Brenner (30) vorgesehen ist, mit welchem der Vier-Wege-Katalysator (28) beheizbar ist.

2. Abgasnachbehandlungssystem nach Anspruch 1, **dadurch gekennzeichnet, dass** in der Abgasanlage (20) stromabwärts des elektrisch beheizbaren Drei-Wege-Katalysators (24) und stromaufwärts des Vier-Wege-Katalysators (28) ein HC-Adsorber (26) angeordnet ist.

3. Abgasnachbehandlungssystem nach einem der Ansprüche 1 oder 2, **dadurch gekennzeichnet, dass** das Sekundärluftsystem (62) eine Sekundärluftpumpe (34) und ein Sekundärluftventil (38) umfasst, wobei das Sekundärluftventil (38) auslassseitig an einem Zylinderkopf (14) des Verbrennungsmotors (10) angeordnet ist.

4. Abgasnachbehandlungssystem nach Anspruch 3, **dadurch gekennzeichnet, dass** die Sekundärluftpumpe (34) über eine Sekundärluftleitung (42) und ein zweites Sekundärluftventil (64) mit dem Brenner (30) verbunden ist.

5. Abgasnachbehandlungssystem nach Anspruch 3, **dadurch gekennzeichnet, dass** eine zweite Sekundärluftpumpe (40) vorgesehen ist, über welche der Brenner (30) mit Frischluft versorgbar ist.

6. Abgasnachbehandlungssystem nach Anspruch 1, **dadurch gekennzeichnet, dass** stromabwärts einer Einmündung (52) des Brenners (30) in einen Abgaskanal (60) der Abgasanlage (20) und stromaufwärts des Vier-Wege-Katalysators (28) ein erster Temperatursensor (54) und stromabwärts des Vier-Wege-Katalysators (28) ein zweiter Temperatursensor (56) angeordnet sind.

7. Abgasnachbehandlungssystem nach einem der Ansprüche 1 bis 6, **dadurch gekennzeichnet, dass** jeweils stromaufwärts und stromabwärts des elektrisch beheizbaren Drei-Wege-Katalysators (24) und stromaufwärts und stromabwärts des Vier-Wege-Katalysators (28) Lambdasonden (44, 46, 48, 50) im Abgaskanal (60) angeordnet sind, wobei die Lambdasonden (44, 46, 48, 50) als wasserschlagfeste, elektrisch beheizbare Lambdasonden (44, 46, 48, 50) ausgeführt sind.

8. Verfahren zur Abgasnachbehandlung eines Verbrennungsmotors (10) mit einem Abgasnachbehandlungssystem, bei dem in einer an einen Auslass (12) des Verbrennungsmotors (10) angeschlossenen Abgasanlage (20) stromabwärts des Auslasses (12) ein motornaher, elektrisch beheizbarer Drei-Wege-Katalysator (24), stromabwärts des elektrisch beheizbaren Drei-Wege-Katalysators (24) ein Vier-Wege-Katalysator (28) und stromabwärts des Vier-Wege-Katalysators (28) ein weiterer Drei-Wege-Katalysator (32) angeordnet sind, wobei stromabwärts des elektrisch beheizbaren Drei-Wege-Katalysators (24) und stromaufwärts des Vier-Wege-Katalysators (28) ein Brenner (30) vorgesehen ist, mit welchem der Vier-Wege-Katalysator (28) beheizbar ist, **dadurch gekennzeichnet, dass** vor oder ab einem Start des Verbrennungsmotors (10) das Beheizen des elektrisch beheizbaren Drei-Wege-Katalysators (24) durch ein Auslösesignal eines Signalgebers gestartet wird und der Brenner (30) aktiviert wird, um den elektrisch beheizbaren Drei-Wege-Katalysator (24) und den Vier-Wege-Katalysator (28) möglichst schnell auf eine Light-Off-Temperatur aufzuheizen.

9. Verfahren zur Abgasnachbehandlung eines Verbrennungsmotors (10) nach Anspruch 8, **dadurch gekennzeichnet, dass** der Signalgeber ein Türkontaktschalter, ein Sensor zur Sitzplatzbelegung, ein Empfänger eines schlüssellosen Schließsystems, ein Gurtschlosssensor oder ein Steuergerät eines Hybridfahrzeuges ist.

## Claims

1. Exhaust gas aftertreatment system for a spark-ignition internal combustion engine (10), in the case of which exhaust gas aftertreatment system, in an exhaust gas system (20) which is connected to an outlet (12) of the internal combustion engine (10), an electrically heatable three-way catalytic converter (24) which is close to the engine is arranged downstream of the outlet (12), a four-way catalytic converter (28) is arranged downstream of the electrically heatable three-way catalytic converter (24), and a further three-way catalytic converter (32) is arranged downstream of the four-way catalytic converter (28), a secondary air system (62) being provided on the exhaust gas system (20), by way of which secondary air system (62) secondary air can be blown or is blown downstream of the electrically heatable three-way catalytic converter (24) into the exhaust gas system (20) of the internal combustion engine (10), and a burner (30) being provided in the exhaust gas system (20) downstream of the electrically heatable three-way catalytic converter (24) and upstream of the four-way catalytic converter (28), by way of which burner (30) the four-way catalytic converter (28) can be heated.

2. Exhaust gas aftertreatment system according to Claim 1, **characterized in that** an HC adsorber (26) is arranged in the exhaust gas system (20) downstream of the electrically heatable three-way catalytic converter (24) and upstream of the four-way catalytic converter (28) .

3. Exhaust gas aftertreatment system according to either of Claims 1 and 2, **characterized in that** the secondary air system (62) comprises a secondary air pump (34) and a secondary air valve (38), the secondary air valve (38) being arranged on the outlet side on the cylinder head (14) of the internal combustion engine (10) .

4. Exhaust gas aftertreatment system according to Claim 3, **characterized in that** the secondary air pump (34) is connected via a secondary air line (42) and a second secondary air valve (64) to the burner (30).

5. Exhaust gas aftertreatment system according to Claim 3, **characterized in that** a second secondary air pump (40) is provided, via which the burner (30) can be supplied with fresh air.

6. Exhaust gas aftertreatment system according to Claim 1, **characterized in that** a first temperature sensor (54) is arranged downstream of a confluence (52) of the burner (30) into an exhaust gas duct (60) of the exhaust gas system (20) and upstream of the four-way catalytic converter (28), and a second temperature sensor (56) is arranged downstream of the four-way catalytic converter (28).

7. Exhaust gas aftertreatment system according to one of Claims 1 to 6, **characterized in that** lambda probes (44, 46, 48, 50) are arranged in the exhaust gas duct (60) in each case upstream and downstream of the electrically heatable three-way catalytic converter (24) and upstream and downstream of the four-way catalytic converter (28), the lambda probes (44, 46, 48, 50) being configured as electrically heatable lambda probes (44, 46, 48, 50) which are resistant to water shock.

8. Method for the exhaust gas aftertreatment of an internal combustion engine (10) by way of an exhaust gas aftertreatment system, in the case of which, in an exhaust gas system (20) which is connected to an outlet (12) of the internal combustion engine (10), an electrically heatable three-way catalytic converter (24) which is close to the engine is arranged downstream of the outlet (12), a four-way catalytic converter (28) is arranged downstream of the electrically heatable three-way catalytic converter (24), and a further three-way catalytic converter (32) is arranged downstream of the four-way catalytic converter (28), a burner (30) being provided downstream of the electrically heatable three-way catalytic converter (24) and upstream of the four-way catalytic converter (28), by means of which burner (30) the four-way catalytic converter (28) can be heated, **characterized in that**, before or from starting of the internal combustion engine (10), the heating of the electrically heatable three-way catalytic converter (24) is started by way of a triggering signal of a signal generator, and the burner (30) is activated, in order to heat the electrically heatable three-way catalytic converter (24) and the four-way catalytic converter (28) as rapidly as possible to a light-off temperature.

9. Method for the exhaust gas aftertreatment of an internal combustion engine (10) according to Claim 8, **characterized in that** the signal generator is a door contact switch, a sensor for seat occupancy, a receiver of a keyless locking system, a seat belt sensor or a control unit of a hybrid vehicle.

## Revendications

1. Système de retraitement des gaz d'échappement pour un moteur à combustion interne à allumage commandé (10), dans lequel, dans un système d'échappement (20) raccordé à un échappement (12) du moteur à combustion interne (10), en aval de l'échappement (12), un catalyseur trois voies à chauffage électrique (24), proche du moteur, est disposé, en aval du catalyseur trois voies à chauffage électrique (24), un catalyseur quatre voies (28) est disposé, et en aval du catalyseur quatre voies (28), un catalyseur trois voies (32) supplémentaire est disposé, dans lequel un système d'air secondaire (62) est prévu sur le système d'échappement (20) et permet d'injecter ou injecte de l'air secondaire en amont du catalyseur trois voies à chauffage électrique (24) dans le système d'échappement (20) du moteur à combustion interne (10), et dans lequel, dans le système d'échappement (20), en aval du catalyseur trois voies à chauffage électrique (24) et en amont du catalyseur quatre voies (28), un brûleur (30) est prévu qui permet de chauffer le catalyseur quatre voies (28).

2. Système de retraitement des gaz d'échappement selon la revendication 1, **caractérisé en ce qu'**un adsorbeur d'hydrocarbure (26) est disposé dans le système d'échappement (20) en aval du catalyseur trois voies à chauffage électrique (24) et en amont du catalyseur quatre voies (28).

3. Système de retraitement des gaz d'échappement selon l'une quelconque des revendications 1 ou 2, **caractérisé en ce que** le système d'air secondaire (62) comprend une pompe à air secondaire (34) et une soupape d'air secondaire (38), la soupape d'air secondaire (38) étant disposée côté échappement sur une tête de cylindre (14) du moteur à combustion interne (10).

4. Système de retraitement des gaz d'échappement selon la revendication 3, **caractérisé en ce que** la pompe à air secondaire (34) est reliée au brûleur (30) par une conduite d'air secondaire (42) et une deuxième soupape d'air secondaire (64).

5. Système de retraitement des gaz d'échappement selon la revendication 3, **caractérisé en ce qu'**une deuxième pompe à air secondaire (40) est prévue qui permet d'alimenter le brûleur (30) en air frais.

6. Système de retraitement des gaz d'échappement selon la revendication 1, **caractérisé en ce qu'**en aval d'une jonction (52) du brûleur (30) avec un canal d'échappement (60) du système d'échappement (20) et en amont du catalyseur quatre voies (28), un premier capteur de température (54) est disposé, et en aval du catalyseur quatre voies (28) un deuxième capteur de température (56) est disposé.

7. Système de retraitement des gaz d'échappement selon l'une quelconque des revendications 1 à 6, **caractérisé en ce que** respectivement en amont et en aval du catalyseur trois voies à chauffage électrique (24) et en amont et en aval du catalyseur quatre voies (28), des sondes lambda (44, 46, 48, 50) sont disposées dans le canal d'échappement (60), les sondes lambda (44, 46, 48, 50) étant réalisées comme des sondes lambda (44, 46, 48, 50) à chauffage électrique, résistantes aux coups de bélier.

8. Procédé de retraitement des gaz d'échappement d'un moteur à combustion interne (10) muni d'un système de retraitement des gaz d'échappement, dans lequel, dans un système d'échappement (20) raccordé à un échappement (12) du moteur à combustion interne (10), en aval de l'échappement (12), un catalyseur trois voies à chauffage électrique (24), proche du moteur, est disposé, en aval du catalyseur trois voies à chauffage électrique (24), un catalyseur quatre voies (28) est disposé, et en aval du catalyseur quatre voies (28), un catalyseur trois voies (32) supplémentaire est disposé, dans lequel, en aval du catalyseur trois voies à chauffage électrique (24) et en amont du catalyseur quatre voies (28), un brûleur (30) est prévu qui permet de chauffer le catalyseur quatre voies (28), **caractérisé en ce qu'**avant ou à partir d'un démarrage du moteur à combustion interne (10), le chauffage du catalyseur trois voies à chauffage électrique (24) est lancé par un signal de déclenchement d'un générateur de signal et le brûleur (30) est activé pour chauffer le catalyseur trois voies à chauffage électrique (24) et le catalyseur quatre voies (28) aussi vite que possible jusqu'à une température d'amorçage.

9. Procédé de retraitement des gaz d'échappement d'un moteur à combustion interne (10) selon la revendication 8, **caractérisé en ce que** le générateur de signal est un contacteur de portière, un capteur d'occupation de siège, un récepteur d'un système de fermeture sans clé, un capteur d'enclenchement de ceinture de sécurité ou un appareil de commande d'un véhicule hybride.
